(19) Europäisches Patentamt
European Patent Office
Office européen des brevets

(11) **EP 2 939 760 A1**

(12) **EUROPEAN PATENT APPLICATION**
published in accordance with Art. 153(4) EPC

(43) Date of publication:
**04.11.2015 Bulletin 2015/45**

(21) Application number: **13867356.1**

(22) Date of filing: **26.12.2013**

(51) Int Cl.:
*B22F 1/00* (2006.01)    *B22F 5/00* (2006.01)
*B22F 9/20* (2006.01)    *C22C 1/04* (2006.01)
*C22C 27/02* (2006.01)    *H01G 9/052* (2006.01)

(86) International application number:
**PCT/JP2013/084849**

(87) International publication number:
**WO 2014/104177 (03.07.2014 Gazette 2014/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.12.2012 JP 2012284216**

(71) Applicant: **Showa Denko K.K.**
**Tokyo 105-8518 (JP)**

(72) Inventors:
• **SHIBUYA Yoshinori**
  **Tokyo 105-8518 (JP)**
• **TSUMITA Yasuo**
  **Tokyo 105-8518 (JP)**
• **KAWASAKI Toshiya**
  **Tokyo 105-8518 (JP)**

(74) Representative: **Strehl Schübel-Hopf & Partner**
**Maximilianstrasse 54**
**80538 München (DE)**

(54) **CHEMICAL CONVERSION BODY FOR NIOBIUM CAPACITOR POSITIVE ELECTRODE, AND PRODUCTION METHOD THEREFOR**

(57) The present invention provides a chemical conversion body that is obtained from a niobium granulated product being porous and having high binding strength, and enables production of an electrolytic capacitor and element having high electrostatic capacitance; and a production method thereof. The capacitor of the present invention comprises a chemical conversion body which has a dielectric layer on its surface and has a metal element other than niobium distributed therein so that the metal element surrounds niobium; and a cathode formed on the dielectric layer on the surface of the chemical conversion body. The chemical conversion body is obtained by obtaining a niobium granulated product by mixing niobium hydride and a compound containing a metal element other than niobium to prepare a mixture; and subjecting the mixture to heat treatment at a temperature higher than a diffusion starting temperature of the compound containing a metal element other than niobium; sintering the resultant; and subjecting the sintered body to the electrolytic oxidation to form a dielectric layer on its surface.

EP 2 939 760 A1

**Description**

Technical Field

The present invention relates to a chemical conversion body for an anode of a capacitor to be obtained from a niobium granulated product. More particularly, the present invention relates to a production method for a niobium granulated product, a production method for a niobium sintered body, a chemical conversion body for a niobium capacitor and a production method therefor, and to a niobium capacitor and a production method therefor. The niobium granulated product according to the present invention has high binding strength, and thus a capacitor having large electrostatic capacitance can be obtained by using as an anode a chemical conversion body obtained by forming a dielectric layer on a sintered body made of the granulated product.

Background Art

In recent years, an electronic device such as a mobile phone or a computer has been reduced in size. Along with this, also an electronic component has been required to be reduced in size, and a tantalum electrolytic capacitor has gained larger capacity. The same thing can be said for a niobium electrolytic capacitor, and there have been made studies for increasing a specific surface area of a niobium granulated product in order to attain larger capacity.

A granulated product generally has a structure in which several hundreds of primary particles are aggregated. The primary particles of the granulated product are reduced in size in order to achieve a larger surface area. Therefore, a binding portion between the primary particles becomes thinner, resulting in a reduction in binding strength. As a result, in a stage in which the granulated product has been formed, voids formed in the particles are filled with the primary particles that have lost their binding state. This reduces a porous portion and a specific surface area, and finally reduces electrostatic capacitance of an element.

In addition, while a solid electrolytic capacitor is produced by sintering the porous body and subjecting it to chemical conversion, attaching a cathode material thereto, and mounting the resultant in a frame, followed by resin sealing, the granulated product is physically damaged by heat and pressure in the resin sealing stage in the case where the granulated product has small binding strength. This leads to an increase in leakage current or establishment of continuity, and performance as a capacitor is not exhibited.

There are various and many study examples on those problems.

For example, JP 2000-500826 A (US 6,126,712) (Patent Document 1) discloses a metal powder granulate obtained by granulating an oxide or a salt of metal cobalt in the presence of a binder, a solvent, and the like, followed by hydrogen reduction. However, the solvent and binder used in the granulation operation are completely removed through the hydrogen reduction, and an attached photograph shows that the metal powder granulate is not the one having a porous form such as metal powder for a capacitor.

JP 2001-303106 A (Patent Document 2) discloses a method of producing a porous sintered molded body having abrasion resistance, the method involving pre-sintering raw material powder in advance, blending the pre-sintered powder with an intergranular binding inhibitor, molding and sintering the resultant, and removing the intergranular binding inhibitor.

JP 48-25859 A (Patent Document 3) discloses an example in which an electrolytic capacitor is produced from a molded and sintered product obtained from a mixture of tantalum powder or niobium powder and a fluoride and is measured for its capacity. It is disclosed that a substance that does not vaporize at a low temperature is used in order to maintain porosity up to an actual sintering temperature.

However, the related art does not disclose any technology that helps to solve the problem in the binding strength of the granulated product formed of niobium powder or reduce deterioration in the performance of the capacitor owing to damage of the sintered porous body or an increase in the leakage current under resin sealing conditions.

Prior Art

Patent Documents

    [Patent Document 1] JP 2000-500826 A (US 6,126,712)
    [Patent Document 2] JP 2001-303106 A
    [Patent Document 3] JP 48-25859 A

Disclosure of the Invention

Problems to be Solved by the Invention

Accordingly, the present invention has been made with a view to solving the above-mentioned problems in the niobium capacitor, and an object of the present invention is to provide a niobium granulated product that is porous and has high binding strength, a chemical conversion body for an anode of a niobium capacitor that enables production of an electrolytic capacitor and element having large electrostatic capacitance, and production methods for the niobium granulated product and the chemical conversion body.

Means to Solve the Problem

As a result of diligent studies, the inventors of the present invention have found that the above-mentioned problems can be solved by using as an anode of a capacitor a chemical conversion body obtained by: mixing niobium hydride and a compound containing a metal element other than niobium to prepare a mixture; subjecting the mixture to heat treatment at a temperature set higher than the diffusion starting temperature of the compound containing a metal element other than niobium to allow the mixture to aggregate to form granulated particles, to thereby obtain a niobium granulated product; and sintering the niobium granulated product, followed by chemical conversion; which chemical conversion body includes a dielectric layer on its surface, and has a metal element other than niobium distributed therein so that the metal element surrounds niobium. Thus, the present invention has been completed.

That is, the present invention relates to a production method for a niobium granulated product according to the following [1] to [8], a production method for a sintered body according to [9], a production method for a chemical conversion body according to [10], a production method for a capacitor according to [11] to [13], a chemical conversion body according to [14] to [17], and a capacitor according to [18].

[1] A production method for a niobium granulated product, comprising:

mixing niobium hydride and a compound containing a metal element other than niobium to prepare a mixture; and subjecting the mixture to heat treatment at a temperature higher than a diffusion starting temperature of the compound containing a metal element other than niobium.

[2] The production method for a niobium granulated product according to [1] above, in which the temperature of the heat treatment is 1,100°C or lower.

[3] The production method for a niobium granulated product according to [1] above, in which the compound containing a metal element other than niobium is a metal oxide.

[4] The production method for a niobium granulated product according to [3] above, in which the metal oxide is a valve action metal oxide.

[5] The production method for a niobium granulated product according to [4] above, in which the valve action metal oxide is tantalum pentoxide, tin(IV) oxide, or tungsten (VI) oxide.

[6] The production method for a niobium granulated product according to [1] above, in which the compound containing a metal element other than niobium is an inorganic salt of a metal.

[7] The production method for a niobium granulated product according to [6] above, in which the inorganic salt of a metal is lithium chloride, cesium chloride, calcium nitride, zinc telluride, or calcium diphosphate.

[8] The production method for a niobium granulated product according to any one of [1] to [7] above, comprising removing part of the compound containing a metal element other than niobium after the heat treatment.

[9] A production method for a sintered body having a strength of 98 N/mm$^2$ or more, comprising:

obtaining a niobium granulated product by the production method described in any one of [1] to [8] above; and sintering the granulated product.

[10] A production method for a chemical conversion body for a capacitor, comprising:

obtaining a sintered body by the production method described in [9] above; and subjecting the sintered body to electrolytic oxidation to form a dielectric layer on a surface thereof.

[11] A production method for a capacitor, comprising:

obtaining a chemical conversion body by the production method described in [10] above; and

forming a cathode on the dielectric layer on the surface of the chemical conversion body.

[12] A production method for a capacitor, comprising:

sintering a niobium granulated product to obtain a sintered body;
subjecting the sintered body to electrolytic oxidation to obtain a chemical conversion body; and
forming a cathode on a dielectric layer on a surface of the chemical conversion body,
wherein the niobium granulated product is obtained by the production method described in any one of [1] to [8] above, and the sintering of the granulated product is performed at a temperature at which the sintered body achieves minimal strength necessary for a production step of a capacitor.

[13] A production method for a capacitor, comprising:

sintering a niobium granulated product to obtain a sintered body;
subjecting the sintered body to electrolytic oxidation to obtain a chemical conversion body; and
forming a cathode on a dielectric layer on a surface of the chemical conversion body,
wherein the niobium granulated product is obtained by the production method described in any one of [1] to [8] above, and a heat treatment temperature in the step of obtaining the granulated product is adjusted so that the sintered body achieves minimal strength necessary for a production step of a capacitor.

[14] A chemical conversion body for an anode of a capacitor, which has a dielectric layer on a surface thereof, comprises niobium and a compound containing a metal element other than niobium, and is characterized in that the metal element other than niobium is distributed therein so that the metal element surrounds niobium.
[15] The chemical conversion body according to [14] above, in which the compound containing a metal element other than niobium is a metal oxide.
[16] The chemical conversion body according to [15] above, in which the metal oxide is a valve action metal oxide.
[17] The chemical conversion body according to [16] above, in which the valve action metal oxide is tantalum pentoxide, tin (IV) oxide, or tungsten(VI) oxide.
[18] A capacitor, comprising the chemical conversion body described in any one of [14] to [17] above; and a cathode on the dielectric layer on the surface of the chemical conversion body.

Effects of the Invention

According to embodiments of the present invention, the binding strength of the niobium granulated product is improved; an element obtained by molding the granulated product retains the porous form and specific surface area of the granulated product; and a capacitor having large electrostatic capacitance is obtained. That is, the heat treatment at a temperature slightly higher than the diffusion starting temperature of the compound containing a metal element other than niobium to be added to niobium hydride (additive) allows the additive to act as an aid in fusion between niobium particles. As a result, when the molded element is sintered, it obtains strength equal to or higher than a required standard. In consequence, electrostatic capacitance can be increased by lowering the heat treatment temperature and sintering temperature to the extent that the strength to meet a required standard is exhibited.
In addition, in case of using a valve action metal oxide as an additive, the metal oxide itself forms a dielectric material well compatible with a dielectric oxide film formed on niobium, and there is no need to remove the additive in a subsequent step because the additive has no influence on the electrical characteristics of the electrolytic capacitor produced by using the granulated product.

Brief Description of Drawings

FIG. 1 is a TEM photograph of a cross section of a chemically modified element of Example 5.
FIG. 2 is a photograph showing distribution of a Nb k$\alpha$ line in the cross section of the chemically modified element of Example 5 by EDX.
FIG. 3 is a photograph showing distribution of a Sn L$\alpha$ line in the cross section of the chemically modified element of Example 5 by EDX.
FIG. 4 is a photograph showing distribution of an O k$\alpha$ line in the cross section of the chemically modified element of Example 5 by EDX.
FIG. 5 is a TEM photograph of a cross section of a chemically modified element of Example 7.

FIG. 6 is a photograph showing distribution of a Nb kα line in the cross section of the chemically modified element of Example 7 by EDX.

FIG. 7 is a photograph showing distribution of a W Lα line in the cross section of the chemically modified element of Example 7 by EDX.

FIG. 8 is a photograph showing distribution of an O kα line in the cross section of the chemically modified element of Example 7 by EDX.

Mode for Carrying out the Invention

A chemical conversion body according to the present invention is a chemical conversion body formed of a niobium granulated product obtained by a production method comprising: mixing niobium hydride and a compound containing a metal element other than niobium (hereinafter sometimes abbreviated as "additive") to prepare a mixture; and subjecting the mixture to heat treatment at a temperature set higher than the diffusion starting temperature of the compound containing a metal element other than niobium, to allow the mixture to aggregate to form granulated particles. The chemical conversion body includes a dielectric layer on its surface and has the metal element other than niobium distributed therein so that the metal element surrounds niobium.

Niobium hydride is used as a raw material. As niobium hydride, one obtained by heating a niobium ingot in a hydrogen atmosphere to allow the niobium ingot to absorb hydrogen is generally used. However, a production method for the raw material is not limited as long as niobium powder subjected to hydrogen embrittlement is obtained, and there may be used: one obtained by reducing a niobium fluoride with sodium to obtain reduced niobium powder, followed by washing the reduced niobium powder with an acid containing hydrofluoric acid to remove impurities and concurrently allow the niobium powder to absorb hydrogen; one obtained by subjecting niobium oxide to magnesium deoxidation treatment to obtain deoxidized niobium powder, followed by washing the deoxidized niobium powder with an acid to remove magnesium as a reducing agent, and then further washing the deoxidized niobium powder with hydrofluoric acid to allow the niobium powder to absorb hydrogen; or the like.

It should be noted that niobium powder having a low degree of hydrogen absorption or niobium powder subjected to vacuum heat treatment to be dehydrogenated loses brittleness and exhibits ductility, and hence is often deformed into a flat shape without being finely powdered in milling in a subsequent step. The powder in such shape is difficult to granulate. With a view to achieving hydrogen embrittlement, it is desired that the concentration of hydrogen in niobium hydride be from 0.4 to 1.0%, preferably from 0.7 to 1.0%.

The diffusion starting temperature is calculated from the following equation based on the Tammann's rule.

$$Td=0.757Tm$$

In the equation, Td represents the diffusion starting temperature (absolute temperature), and Tm represents a melting point (absolute temperature) measured at a pressure of 1 atm.

In the present invention, the compound containing an element other than niobium to be added to niobium hydride (additive) is a substance that has a diffusion starting temperature of 1,100°C or lower and does not react with niobium and other additives. Specific examples thereof include tantalum pentoxide (diffusion starting temperature: 1,045°C), tungsten(VI) oxide (diffusion starting temperature: 1,049°C), and tin(IV) oxide (diffusion starting temperature: 919°C). Those compounds are oxides, and inorganic salts of the metals of those compounds may also be used. It should be noted that a compound other than a fluoride and a sulfide is preferably used, because there are only several kinds of fluorides or sulfides having a diffusion starting temperature within a treatment temperature range, and fluorine or sulfur may affect the characteristics of a capacitor to be subsequently obtained. In addition, a compound to be decomposed through the heat treatment or the like does not serve as a fusion aid, and hence a compound that is not decomposed through the heat treatment is preferably used.

As a method of microscopically mixing the additive and niobium hydride, it is preferable to use a method involving using a stirring ball mill, which allows the raw materials to be finely pulverized and mixed with each other at the same time. As the stirring ball mill, for example, an attrition ball mill or a bead mill is preferred.

A case of using a bead mill is hereinafter described in detail.

The raw material particles are used after being allowed to pass through a sieve having an opening of 1 mm. It is desired that beads to be used in the bead mill each have a diameter of from 0.3 to 3 mm, and it is preferred to perform coarse pulverization with 3-mm beads and perform fine pulverization with 0.5-mm beads. When the raw material particles each have a particle diameter of more than 1 mm, the beads for pulverizing the particles are increased in diameter, and hence a dead space in the mill is increased, resulting in inefficient pulverization. In addition, it is desired to exchange the beads to ones having a smaller diameter at the time when the average particle diameter of the material reaches several micrometers, because the achievement of pulverization depends on the bead diameter.

The amount of the beads to be loaded is preferably from 60 to 90%. When the loaded amount is less than 60%, the number of collisions between the beads and the raw materials is reduced, resulting in poor pulverization efficiency. When the loaded amount exceeds 90%, the number of the collisions is excessively increased, and a device stops owing to an excessive load.

A stirring speed is preferably from 20 to 30 Hz. When the stirring speed is less than 20 Hz, the collision speed between the beads and the raw materials is reduced, resulting in poor pulverization efficiency. When the stirring speed exceeds 30 Hz, the collision speed is excessively increased, and the device itself is damaged.

A pulverization rate is preferably approximately from 0.7 to 1.3 kg/h, while the pulverization rate depends on the capacity of the device. When the amount of the materials is small with respect to the capacity of the device, the pulverization proceeds in a short time, and the mixing is insufficient at the time when a desired average particle diameter is achieved. When the amount of the materials is large with respect to the capacity of the device, the materials stay in the device for a longer time, and hence an impurity component derived from the device is increased. Therefore, it is preferred to set the pulverization rate within the above-mentioned range.

The completion point of the pulverization is judged by determining the average particle diameter of the materials. As the most rapid and simple method, a method using a laser diffraction particle size distribution analyzer is recommended. The pulverization time period and the average particle diameter have an exponential relationship, and hence the operation can be performed efficiently by sampling the materials at constant time intervals during the pulverization (milling), and determining a D50 value, which is an average particle diameter, to thereby preliminarily approximately calculate a pulverization time period required to achieve a desired primary particle diameter. Thus, a slurry in which niobium hydride and the additive are microscopically mixed is obtained.

When water as a dispersion medium is directly removed from the slurry, the particles are closely packed, and hence entirely unified in this state through the heat treatment and does not meet requirements as the niobium granulated product. Therefore, there is a need to appropriately granulate the particles. In addition, at this time, a pore forming agent may be used with no limitation so that the particles after the heat treatment become porous.

The pore forming agent is preferably a substance that has no reactivity to the mixture of niobium hydride and the compound containing a metal element other than niobium, can be easily removed, can be added directly to the slurry, and is in the form of fine particles having an average particle diameter of from 0.5 to 5 $\mu$m. Examples of the pore forming agent include a metal oxide, an inorganic salt, and an organic compound. An example of the metal oxide is, for example, magnesium oxide. An example of the inorganic salt is ammonium chloride. An example of the organic compound is camphor. Of those, an alkaline earth metal oxide (magnesium oxide or the like) is preferred because the alkaline earth metal oxide is not evaporated through the heat treatment by virtue of a high melting point and is easily removed by, for example, washing with an acid.

Granulation is performed in order to improve the physical property values of powder. Production steps for a capacitor include a step of processing material powder into a green compact with a molding machine. In this step, it is necessary that the powder shows no change in its properties (powder flowability and binding strength) in the molding machine, and is easy to transport. Whereas non-granulated powder is in the form of aggregated particles having an indefinite shape and exhibits poor flowability, granulated powder is preferred in terms of the molding because of its round shape and good flowability. In addition, when the granulated product has low binding strength, it gives rise to fine particles, in which several primary particles are aggregated, resulting in causing a reduction in flowability, and die leakage and die galling in the molding machine. The granulated product is also preferred because the granulated product has such a shape that the primary particles are prevented from being chipped away.

The raw materials after the granulation are subjected to heat treatment. With this, hydrogen is desorbed from the raw materials, and thereby niobium is generated. At the same time, the particles are brought into close contact with each other through heat diffusion at an atomic level to form a network with adjacent particles, and thus bonding strength is increased. The heat treatment temperature in this case needs to be equal to or higher than a temperature at which atoms of the raw materials start diffusing. When the temperature is too high, diffused atoms are to reduce surface energy, resulting in a reduction in specific surface area. This directly leads to a reduction in the electrostatic capacitance of an anode body obtained from the granulated product. Therefore, the conditions of the heat treatment are naturally determined by appropriately setting bonding strength for realizing the binding strength of the granulated product to be required and the electrostatic capacitance to be required.

The diffusion starting temperature of niobium is 614°C. The heat treatment temperature to be generally employed in the production of niobium powder exceeds 1,000°C, which is a sufficient temperature condition for diffusion of niobium, and a network between the particles is formed via contact points between the particles and shows growth. At this time, also the additive (a substance whose diffusion starting temperature described above is 1,100°C or lower) itself is diffused because the heat treatment temperature exceeds its diffusion starting temperature. However, the diffusion of the additive does not occur on a large scale as compared to that of niobium, because a difference between the heat treatment temperature and its diffusion starting temperature is not so large as that in the case of niobium atoms. At this time, the degree of diffusion of niobium is larger, and hence the additive is pushed away by the movement of niobium, and located so that the additive surrounds niobium. For example, when there is a diffusion movement, in which a contact portion between primary particles of niobium serves as a bridge to form a neck, the neck portion grows so as to reduce the surface energy because the niobium atoms diffuse so that the energy is reduced. The additive is eliminated from a neck joining surface and moves to a peripheral portion of the neck. The additive itself diffuses at the neck portion because the heat treatment temperature exceeds its diffusion starting temperature, and as a result, exhibits an effect of reinforcing the neck portion of the particles.

After the completion of the heat treatment, niobium is in the form of an aggregate, and hence is crushed into a granular form by an appropriate method, and its particle size distribution is adjusted. As a crusher, a roll granulator, a pin mill, a speed mill, or the like may be used. In addition, the particle size may be adjusted by using a sieve in combination so that the granulated product achieves a particle size distribution falling within a required range. At this time, fine particles result from broken pieces of the crushed particles and have a large influence on physical property values associated with the dynamic characteristics of the granulated product, such as an angle of repose and flowability. Therefore, it is desired to adjust the particle size particularly with respect to the fine particles.

In the case of using the pore forming agent, it is desirable to remove the pore forming agent in this stage. In the case where the pore forming agent is an inorganic salt, it is removed with an appropriate solvent. In the case where the pore forming agent is an oxide, it is removed with an appropriate acid, alkali, or chelate agent. A combination in which the additive may be dissolved to be removed should be avoided. For example, in the case where the additive is a titanium compound, it is preferred to use an acid other than hydrochloric acid. Reaction heat is often generated along with the removal, and in this case, the surface of niobium may be oxidized owing to its high affinity for oxygen. The temperature of the dissolution and removal is preferably lower than 50°C, particularly preferably from 0 to 30°C. After the removal, an excessive solvent is washed with water, alcohol, or the like. In the case where the pore forming agent is an organic compound, the pore forming agent is decomposed through the heat treatment and already removed from the particles. However, it is desired to once perform washing with an appropriate solvent, because fine particles can be further removed by an elutriation effect of the washing.

After the washing, the solvent is removed from the particles with a dryer. For the drying, a general vacuum dryer may be used with no limitation. In the case where the solvent is water, the temperature of the drying is desirably lower than 50°C until the water is sufficiently vaporized. The time period of the drying is shortened by removing the water with a water-soluble organic solvent in advance. While the pressure in the dryer reduces when the solvent is vaporized, it is desired to increase the temperature to 50°C or higher at the time when bumping does not occur. In addition, by increasing the temperature while adopting a nitrogen atmosphere in the dryer, the surfaces of alloy particles can be nitrided, which provides an antioxidant effect.

The particles thus obtained can be used as the niobium granulated product in a facility using a general niobium granulated product for a capacitor or a tantalum granulated product for a capacitor, such as a molding device, a sintering device, a chemical conversion device, an impregnation device, a paste application device, a frame mounting device, and a sealing device, with no particular limitation.

Examples

The present invention is hereinafter described in detail by way of Examples and Comparative Examples, but the present invention is not limited to these examples.

The conditions of analysis methods for the chemical analysis values (contents of oxygen, tin, and tungsten), specific surface area, bulk density, and index of powder binding strength of granulated products of Examples and Comparative Examples, and for the electrostatic capacitance, leakage current, and sintered body strength of chemical conversion bodies of Examples and Comparative Examples are described below.

Chemical analysis values: Metal elements other than oxygen and niobium were quantitatively determined with an inductively coupled plasma (ICP) emission spectrophotometer after a sample was dissolved in hydrofluoric acid.

Specific surface area ($m^2$/g): The specific surface area was measured with a BET-type surface area measuring device (manufactured by Quantachrome).

Bulk density (g/$cm^3$): The bulk density was measured with a bulk density measuring device in accordance with JIS Z 2504.

Index of powder binding strength: A treated sample obtained by dispersing the sample in pure water and treating the resultant with an ultrasonic homogenizer having an output power of 200 W for 3 minutes, and an untreated sample were each measured for its particle size distribution with a laser diffraction particle size analyzer. In the portion where the graph form of the treated sample and that of the untreated sample overlapped in the graph of the particle size distribution, the ratio of the area of the treated sample to the area of the untreated sample was defined as the index of powder strength.

Particle size distribution: The particle size distribution was measured by a laser diffraction scattering method using HRA9320-X100 manufactured by Microtrac Inc.

Average particle diameter (D50): A particle diameter corresponding to a cumulative volume percent of 50 vol% in the particle size distribution measured as described above was defined as an average particle diameter (D50).

Electrical characteristics: The electrostatic capacitance ($\mu$FV/g) was measured by using platinum black electrodes and 30% sulfuric acid as a measurement liquid, at a bias voltage of 1.5 V at 120 Hz. The leakage current ($\mu$A/g) was obtained by measuring a current value, 5 minutes after application of a voltage of formation voltage$\times$0.7.

Electrical characteristics after heating: From simulation of a reflow furnace for soldering a capacitor to a substrate, a chemical conversion body was heated at 260°C for 20 minutes, left to be cooled, and then measured for the electrostatic capacitance and the leakage current.

Sintered body strength (N/mm$^2$): A sintered body element having a rectangular parallelepiped shape in which an anode terminal wire was embedded was placed so that surfaces parallel to the embedded wire and having smaller areas were arranged to be a top face and a bottom face. The element was compressed with a digital force gauge manufactured by Imada Co., Ltd. and a value at the time of buckling failure was determined. A value obtained by dividing the value of buckling failure by the area of the top or bottom face of the element was defined as the sintered body strength.

Example 1:

A niobium hydride aggregate prepared by allowing a niobium ingot to absorb hydrogen was pulverized with an impact mill, and then classified with a gyro sifter using a sieve having an opening of 1 mm. Niobium hydride particles that passed through the sieve were used as a raw material in the following steps. At this time, the concentration of hydrogen in the niobium hydride particles was found to be 0.95%.

Tin(IV) oxide as a commercially available special grade reagent was prepared as an additive to be used in heat treatment.

Those raw materials were mixed with each other and concurrently finely pulverized with a bead mill using pure water as a dispersion medium. The setting conditions of the bead mill were as follows: zirconia beads each having a diameter of 3 mm were used; the amount of the beads to be loaded was set to 80%; and the number of stirring revolutions was set to 25 Hz. The raw materials to be treated were blended so that the amount of niobium in terms of a pure component was 10 kg in total, and the content of tin(IV) oxide in terms of tin was 1 mass% with respect to niobium. The mixture was subjected to wet pulverization at a concentration of slurry of 50% for 3 hours. 2 hours later, the average particle diameter was measured with a laser diffraction particle size analyzer, and found to be 2.2 $\mu$m in terms of the D50 value. Next, the beads were changed to silicon nitride beads each having a diameter of 0.5 mm, and the pulverization was continued until the D50 value reached 0.5 $\mu$m. 6 hours later, the slurry was recovered at the time when the D50 value reached 0.48 $\mu$m.

Next, 3 kg of magnesium oxide having an average particle diameter of 1 $\mu$m was added as a pore forming agent to the slurry, followed by sufficient stirring. Then, the resultant was loaded in a horizontal stirring granulator, and granulated and dried at a jacket temperature of 50°C under reduced pressure. 8 hours after the loading, a granulated and dried aggregate having a diameter of from 2 to 3 mm was obtained. The granulated and dried aggregate was moved onto a heat-resistant plate and subjected to heat treatment. Hydrogen contained in the raw materials was sufficiently desorbed at 400°C in the course of temperature increase, and the temperature was retained at a maximum reaching temperature (Tmax) of 1,100°C for 600 minutes to complete fusion of the particles.

The niobium aggregate after the heat treatment was gradually oxidized so that the niobium aggregate was prevented from igniting. The niobium aggregate was taken out and then crushed to achieve an average particle diameter of about 100 $\mu$m with a roll granulator.

Further, the crushed powder was washed with nitric acid to dissolve and remove magnesium oxide remaining in the particles, and thus pores were formed. After the completion of the dissolution reaction, the crushed powder was washed with pure water by decantation and fine particles dispersed therein were removed by water flow. Then, granulated particles formed of niobium powder were recovered. Finally, the granulated particles were moved into a container, dried at 50°C under reduced pressure, and then finished by drying at 250°C. Thus, a sample of a granulated product was obtained.

Example 2:

A sample of a granulated product was obtained by the same procedure as in Example 1 except that the maximum reaching temperature of the heat treatment was changed to 1,060°C in Example 1.

Comparative Example 1:

A sample of a granulated product was obtained by the same procedure as in Example 1 except that the maximum reaching temperature of the heat treatment was changed to 900°C in Example 1.

Example 3:

A sample of a granulated product was obtained by the same procedure as in Example 1 except that tungsten(VI) oxide as a commercially available special grade reagent was used instead of tin(IV) oxide in Example 1.

Example 4:

A sample of a granulated product was obtained by the same procedure as in Example 1 except that the maximum reaching temperature of the heat treatment was changed to 1,060°C in Example 3.

Comparative Example 2:

A sample of a granulated product was obtained by the same procedure as in Example 3 except that the maximum reaching temperature of the heat treatment was changed to 1,140°C in Example 3.

Comparative Example 3:

A sample of a granulated product was obtained by the same procedure as in Example 3 except that the maximum reaching temperature of the heat treatment was changed to 1,020°C in Example 3.

Comparative Example 4:

A sample of a granulated product was obtained by conducting the same steps as in Example 1 using only the niobium hydride particles without using the additive.

Comparative Example 5:

A sample of a granulated product was obtained by the same procedure as in Comparative Example 4 except that the maximum reaching temperature of the heat treatment was changed to 1,060°C in Comparative Example 1.

Comparative Example 6:

A sample of a granulated product was obtained by the same procedure as in Example 1 except that tungsten(IV) oxide as a commercially available reagent was used as the additive in Example 1.
Table 1 shows the physical property values of those samples of Examples 1 to 4 and Comparative Examples 1 to 6.
[Table 1]

| | Additive | *Tmax [°C] | Tmax-*Td [°C] | Chemical analysis values | | | Specific surface area [m$^2$/g] | Bulk density [g/cm$^3$] | Index of powder binding strength |
|---|---|---|---|---|---|---|---|---|---|
| | | | | O [%] | Sn [ppm] | W [ppm] | | | |
| Example 1 | SnO$_2$ | 1,100 | 181 | 5.5 | 7,800 | <50 | 2.57 | 1.17 | 0.8 |
| Example 2 | | 1,060 | 141 | 5.5 | 7.800 | <50 | 3.25 | 1.1 | 0.61 |
| Comparative Example 1 | | 900 | -19 | 5.6 | 7,700 | <50 | 3.52 | 1.08 | 0.33 |

(continued)

| | Additive | *Tmax [°C] | Tmax-*Td [°C] | Chemical analysis values | | | Specific surface area | Bulk density | Index of powder binding strength |
|---|---|---|---|---|---|---|---|---|---|
| | | | | O [%] | Sn [ppm] | W [ppm] | [m²/g] | [g/cm³] | |
| Comparative Example 2 | WO₃ | 1,140 | 91 | 5.2 | N.D. | 7,700 | 2.38 | 1.21 | 0.89 |
| Example 3 | | 1,100 | 51 | 5.4 | N.D. | 6,200 | 2.51 | 1.16 | 0.87 |
| Example 4 | | 1,060 | 11 | 5.8 | N.D. | 8,300 | 3.62 | 0.91 | 0.84 |
| Comparative Example 3 | | 1,020 | -29 | 7.1 | N.D. | 6,900 | 3.72 | 0.89 | 0.29 |
| Comparative Example 4 | None | 1,100 | - | 5.8 | N.D. | <50 | 3.25 | 1.1 | 0.45 |
| Comparative Example 5 | | 1,060 | - | 5.5 | N.D. | <50 | 3.5 | 1.1 | 0.24 |
| Comparative Example 6 | WO₂ | 1,100 | -120 | 5.5 | N.D. | 6,500 | 3.11 | 1.05 | 0.41 |

As is apparent from Table 1, in the samples containing tin and tungsten in Examples and Comparative Examples, the concentrations of tin and tungsten were reduced to about from 60% to 80% of their concentrations in the initial loaded amount (1 mass%). This is caused by reductions in their amounts in the steps resulting from their dropout in the mixing and the heat treatment, or the like. The specific surface area (m²/g) correlates with the maximum reaching temperature (Tmax) of the heat treatment, and the specific surface area becomes larger as the maximum reaching temperature becomes lower. The index of powder binding strength correlates with the presence or absence of the additive, and the index in the case of using tungsten(VI) oxide is kept at a high value. In addition, tungsten(IV) oxide (Td: 1,220°C) is sublimated and decomposed to form tungsten(VI) oxide through the heat treatment, but at this time, is separated from the vicinity of niobium. Therefore, in the sample using tungsten(IV) oxide, the increase in the powder binding strength is not so remarkable as in Example 3 using tungsten(VI) oxide from the beginning. In each of Comparative Examples 1 and 3, in which the heat treatment is performed at a maximum reaching temperature (Tmax) lower than the diffusion starting temperature (Td) of the additive, $SnO_2$ (Td: 919°C) or $WO_3$ (Td: 1,049°C), the index of powder binding strength is lower.

Example 5:

Camphor in an amount of 3 mass% was mixed in the sample obtained in Example 1, and the mixture was formed into a niobium molded body with an automatic element molding machine. A niobium wire was planted in the center of the element, and the molded body was adjusted to have a volume of about 20 mm³ and a density of about 3.0 g/cm³. The element was placed in a vacuum sintering furnace and retained at a degree of vacuum of $10^{-3}$ Pa or less and a maximum temperature of 1,200°C for 30 minutes to produce a sintered body. Anodic oxidation was conducted at a current density of 200 mA/g and 20 V by using as an anode the sintered body and as an electrolyte a 1 mass% phosphoric acid aqueous solution at 90°C. The sintered body was retained for 3 hours at a constant voltage after the voltage reached 20 V to produce a chemical conversion body. The chemical conversion body was washed with flowing water and dried, and then subjected to the various tests. In addition, the chemical conversion body was cut, and observed with a transmission electron microscope (TEM) and subjected to elemental analysis by energy dispersive X-ray spectrometry (EDX).

Examples 6 to 8:

Chemical conversion bodies were produced by the same steps as in Example 5 except that the samples of a granulated product obtained in Examples 2 to 4 were used instead of the sample in Example 5, and subjected to the various tests. It should be noted that the chemical conversion body obtained in Example 7 was cut, and observed with a TEM and subjected to elemental analysis by EDX.

Comparative Examples 7 to 12:

Chemical conversion bodies were produced by the same steps as in Example 5 except that the samples of a granulated product obtained in Comparative Examples 1 to 6 were used instead of the sample in Example 5, and subjected to the various tests.

Table 2 shows the electrical characteristic values of the chemical conversion bodies of Examples 5 to 8 and Comparative Examples 7 to 12.

[Table 2]

| | Used granulated product | *Tmax [°C] | Tmax-*Td [°C] | Electrostatic capacitance [$\mu$FVg$^{-1}$] | | Leakage current [$\mu$A/g] | Sintered body strength [N/mm$^2$] |
|---|---|---|---|---|---|---|---|
| | | | | Normal measurement | Measurement after heating | | |
| Example 5 | Example 1 | 1,100 | 181 | 135,000 | 160,000 | 116 | 116.62 |
| Example 6 | Example 2 | 1,060 | 141 | 142,000 | 168,000 | 58 | 193.06 |
| Comparative Example 7 | Comparative Example 1 | 900 | -19 | 139,000 | 159,000 | 176 | 120.54 |
| Comparative Example 8 | Comparative Example 2 | 1,140 | 91 | 118,000 | 136,000 | 47 | 141.12 |
| Example 7 | Example 3 | 1,100 | 51 | 133,000 | 159,000 | 74 | 135.24 |
| Example 8 | Example 4 | 1,060 | 11 | 166,000 | 177,000 | 89 | 111.72 |
| Comparative Example 9 | Comparative Example 3 | 1,020 | -29 | 155,000 | 173,000 | 189 | 47.04 |
| Comparative Example 10 | Comparative Example 4 | 1,100 | - | 135,000 | 154,000 | 70 | 105.84 |
| Comparative Example 11 | Comparative Example 5 | 1,060 | - | 153,000 | 176,000 | 88 | 90.16 |
| Comparative Example 12 | Comparative Example 6 | 1,100 | - | 131,000 | 151,000 | 101 | 94.08 |
| *Tmax: Maximum reaching temperature of heat treatment *Td: Diffusion starting temperature | | | | | | | |

As is apparent from Table 2, the samples in which the heat treatment of the granulated and dried aggregate is performed at a maximum reaching temperature of 1,060°C have larger electrostatic capacitance than those of the samples at a maximum reaching temperature of 1,100°C. While the electrostatic capacitance correlates with the specific surface area after the heat treatment, it is noteworthy that the behavior of the sintered body strength changes. In Examples 5 and 7 and Comparative Example 4 under the condition of a heat treatment temperature of 1,100°C, substantially the same electrostatic capacitance is obtained. However, in Examples 6 and 8 and Comparative Example 5 under the condition of a heat treatment temperature of 1,060°C, the behavior of the sintered body strength largely changes as compared to that of the electrostatic capacitance. The sintered body is required to have such strength that the sintered body withstands pressure in resin sealing of a product at the time of the production of a capacitor, but excessively high sintered body strength at this time comes to nothing. The elements of Examples 6 and Example 8 can be obtained through heat treatment and sintering at lower temperature, and thus exhibit an effect of relatively increasing the specific surface area and the electrostatic capacitance. It should be noted that the use of the granulated product obtained through the heat treatment under the temperature condition lower than the diffusion starting temperature of the additive as in Comparative Examples 7 and 9 leads to an increase in the sintered body strength, but the leakage current is increased as well. Therefore, the conditions in those Comparative Examples are not preferred when judged in a comprehensive manner. In addition, a higher maximum reaching temperature as in Comparative Example 8 only leads to a reduction in the electrostatic capacitance, and the effect of the additive is not exhibited. The element of Comparative Example 12 has lower sintered body strength than the element of Example 7. This reveals that tungsten (VI) oxide is more preferably used than tungsten(IV) oxide.

Example 9:

A chemical conversion body was produced by the same steps as in Example 8 except that the sintering temperature to obtain the sintered body was changed to 1,170°C, and subjected to the various tests. Table 3 shows the electrical characteristic values of the chemical conversion body.

[Table 3]

| | Used powder | Sintering temperature [°C] | Electrostatic capacitance [$\mu FVg^{-1}$] | | Sintered body strength [$N/mm^2$] |
|---|---|---|---|---|---|
| | | | Normal measurement | Measurement after heating | |
| Example 8 | Example 4 | 1,200 | 166,000 | 177,000 | 111.72 |
| Example 9 | Example 4 | 1,170 | 173,000 | 182,000 | 98.98 |

Table 3 shows the results of the electrical characteristics of the chemical conversion body when the sintered body strength is set to about 98 ($N/mm^2$). The element satisfying the sintered body strength and having larger electrostatic capacitance can be easily produced. While the electrostatic capacitance is increased by 4% by only reducing the sintering temperature in Example 9, a further improvement can be expected by adjusting other set conditions.

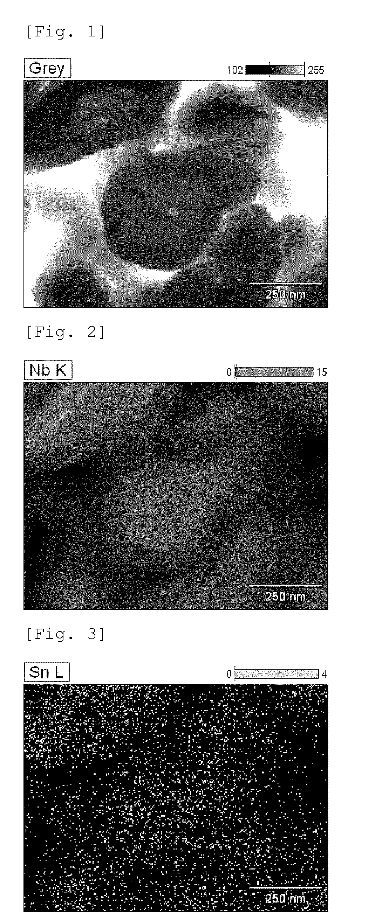

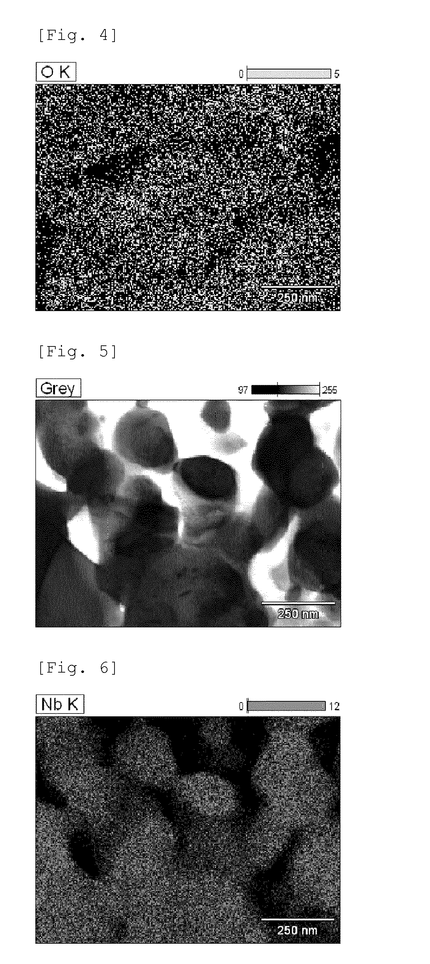

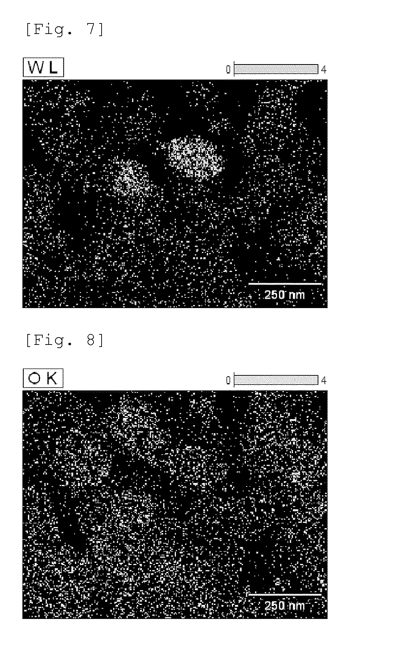

FIGS. 1 to 4 and FIGS. 5 to 8 are photographs obtained by observing the chemical conversion bodies of Example 5 (using the granulated product of Example 1) and Example 7 (using the granulated product of Example 3), respectively. FIGS. 1 and 5 are photographs of cross sections of the chemically modified elements of Example 1 and Example 5, respectively, taken with a transmission electron microscope (TEM) (at a magnification of 200,000). FIGS. 2 to 4 are photographs showing distribution of a Nb k$\alpha$ line, a Sn L$\alpha$ line, and an O k$\alpha$ line, respectively, in the cross section of the chemically modified element of Example 5 by energy dispersive X-ray spectrometry (EDX) (at a magnification of 200,000). FIGS. 6 to 8 are photographs showing distribution of a Nb k$\alpha$ line, a Sn L$\alpha$ line, and an O k$\alpha$ line, respectively, in the cross section of the chemically modified element of Example 7 by EDX (at a magnification of 200,000).

From FIGS. 2 to 4 and FIGS. 6 to 8, it can be confirmed that a tin element and a tungsten element are distributed so as to surround niobium, respectively. Those observation results and the results of Tables 1 to 3 reveal that the capacitor using the chemical conversion body in which a metal element other than niobium is distributed so as to surround niobium has excellent electrical characteristics.

**Claims**

1. A production method for a niobium granulated product, comprising:

   mixing niobium hydride and a compound containing a metal element other than niobium to prepare a mixture; and subjecting the mixture to heat treatment at a temperature higher than a diffusion starting temperature of the compound containing a metal element other than niobium.

2. The production method for a niobium granulated product according to claim 1, in which the temperature of the heat treatment is 1,100°C or lower.

3. The production method for a niobium granulated product according to claim 1, in which the compound containing a metal element other than niobium is a metal oxide.

4. The production method for a niobium granulated product according to claim 3, in which the metal oxide is a valve action metal oxide.

5. The production method for a niobium granulated product according to claim 4, in which the valve action metal oxide is tantalum pentoxide, tin(IV) oxide, or tungsten (VI) oxide.

6. The production method for a niobium granulated product according to claim 1, in which the compound containing a metal element other than niobium is an inorganic salt of a metal.

7. The production method for a niobium granulated product according to claim 6, in which the inorganic salt of a metal is lithium chloride, cesium chloride, calcium nitride, zinc telluride, or calcium diphosphate.

8. The production method for a niobium granulated product according to any one of claims 1 to 7, comprising removing part of the compound containing a metal element other than niobium after the heat treatment.

9. A production method for a sintered body having a strength of 98 N/mm$^2$ or more, comprising:

   obtaining a niobium granulated product by the production method claimed in any one of claims 1 to 8; and
   sintering the granulated product.

10. A production method for a chemical conversion body for a capacitor, comprising:

   obtaining a sintered body by the production method claimed in claim 9; and
   subjecting the sintered body to electrolytic oxidation to form a dielectric layer on a surface thereof.

11. A production method for a capacitor, comprising:

   obtaining a chemical conversion body by the production method claimed in claim 10; and
   forming a cathode on the dielectric layer on the surface of the chemical conversion body.

12. A production method for a capacitor, comprising:

   sintering a niobium granulated product to obtain a sintered body;
   subjecting the sintered body to electrolytic oxidation to obtain a chemical conversion body; and
   forming a cathode on a dielectric layer on a surface of the chemical conversion body,
   wherein the niobium granulated product is obtained by the production method claimed in any one of claims 1 to 8, and the sintering of the granulated product is performed at a temperature at which the sintered body achieves minimal strength necessary for a production step of a capacitor.

13. A production method for a capacitor, comprising:

   sintering a niobium granulated product to obtain a sintered body;
   subjecting the sintered body to electrolytic oxidation to obtain a chemical conversion body; and
   forming a cathode on a dielectric layer on a surface of the chemical conversion body,
   wherein the niobium granulated product is obtained by the production method claimed in any one of claims 1 to 8, and a heat treatment temperature in the step of obtaining the granulated product is adjusted so that the sintered body achieves minimal strength necessary for a production step of a capacitor.

14. A chemical conversion body for an anode of a capacitor, which has a dielectric layer on a surface thereof, comprises niobium and a compound containing a metal element other than niobium, and is **characterized in that** the metal element other than niobium is distributed therein so that the metal element surrounds niobium.

15. The chemical conversion body according to claim 14, in which the compound containing a metal element other than niobium is a metal oxide.

16. The chemical conversion body according to claim 15, in which the metal oxide is a valve action metal oxide.

17. The chemical conversion body according to claim 16, in which the valve action metal oxide is tantalum pentoxide, tin (IV) oxide, or tungsten(VI) oxide.

18. A capacitor, comprising the chemical conversion body claimed in any one of claims 14 to 17; and a cathode on the dielectric layer on the surface of the chemical conversion body.

[Fig. 1]

[Fig. 2]

[Fig. 3]

[Fig. 4]

[Fig. 5]

[Fig. 6]

[Fig. 7]

[Fig. 8]

## INTERNATIONAL SEARCH REPORT

| International application No. |
| --- |
| PCT/JP2013/084849 |

A. CLASSIFICATION OF SUBJECT MATTER
*B22F1/00*(2006.01)i, *B22F5/00*(2006.01)i, *B22F9/20*(2006.01)i, *C22C1/04*
(2006.01)i, *C22C27/02*(2006.01)i, *H01G9/052*(2006.01)i

According to International Patent Classification (IPC) or to both national classification and IPC

B. FIELDS SEARCHED

Minimum documentation searched (classification system followed by classification symbols)
B22F1/00, B22F5/00, B22F9/20, C22C1/04, C22C27/02, H01G9/052

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2006-179886 A (Showa Denko Kabushiki Kaisha),<br>06 July 2006 (06.07.2006),<br>claims; paragraph [0071]<br>& US 2008/0106852 A1  & WO 2006/057455 A1 | 14–18<br>1–13 |
| X<br>A | WO 02/15208 A1 (Showa Denko Kabushiki Kaisha),<br>21 February 2002 (21.02.2002),<br>page 3, lines 7 to 20; page 5, lines 8 to 14;<br>page 52, line 9 to page 53, line 14<br>& JP 4562986 B      & US 2002/0064476 A1<br>& US 2003/0205106 A1  & EP 1324359 A1<br>& AU 7773401 A      & CA 2418865 A<br>& KR 10-2006-0006104 A  & CN 1446364 A | 14–16,18<br>1–13,17 |

☐ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>29 January, 2014 (29.01.14) | Date of mailing of the international search report<br>10 February, 2014 (10.02.14) |
| --- | --- |
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000500826 A
- US 6126712 A
- JP 2001303106 A
- JP 48025859 A